# EUROPEAN PATENT SPECIFICATION

(11) **EP 0 782 682 B1**
(45) Date of publication and mention of the grant of the patent: **27.08.2003**
(21) Application number: 95933915.1
(22) Date of filing: 22.09.1995
(51) Int. Cl.: F23D 5/12, G01M 19/00, F23G 7/06

(54) **SYSTEM TO TEST THERMAL OXIDIZER EFFICIENCY**
ANLAGE ZUR PRÜFUNG DES WIRKUNGSGRADES EINER THERMISCHEN OXIDATIONSVORRICHTUNG
SYSTEME PERMETTANT DE CONTROLER L'EFFICACITE D'UN DISPOSITIF D'OXYDATION THERMIQUE

(30) Priority: 23.09.1994 US 311294
(43) Date of publication of application: 09.07.1997
(73) Proprietor: SMITHKLINE BEECHAM CORPORATION, King of Prussia, PA 19406-0939 (US)
(72) Inventor: KOSTER, Robert, Elmer, Newtown Square, PA 19073 (US)
(74) Representative: Connell, Anthony Christopher
(86) International application number: US9512139
(87) International publication number: WO96009495

(56) References cited:
- US-A- 3 215 126
- US-A- 3 841 828
- US-A- 5 249 551
- US-A- 5 455 014

## Description

### Field of the Invention

The present invention relates to an apparatus useful for determining the efficiency of a thermal oxidizer, as well as a method for using the apparatus.

### Background of the Invention

In many manufacturing settings there is a need to dispose of waste gas streams. While the simplest and least expensive disposal method is to exhaust the gas stream into the ambient atmosphere, such a disposal method may cause harm to the environment, and may violate federal, state or local pollution control laws in those instances where the waste gas stream contains organic chemicals. It has therefore become common practice to pass waste gas streams through a scrubber, in order to remove certain organic components from the gas stream and allow the gas stream to be safely exhausted into the atmosphere.

One device commonly used for removal of organic chemicals from a waste gas stream is a thermal oxidizer. In a typical thermal oxidizer, the waste gas stream is combined with an oxygen-containing gas stream, *e.g*., air, and then passed through a flame produced by burning a combustible substance, *e.g*., natural gas. This process oxidizes the organic chemicals and converts them into carbon dioxide and water. The thermal oxidizer thus converts certain organic chemicals into environmentally harmless chemicals that may be safely exhausted into the atmosphere. In many modern manufacturing plants, thermal oxidizers are permanently installed in gas exhaust ducts.

While in theory and preferred practice, a thermal oxidizer can oxidize all or substantially all of the undesirable organic chemicals in a waste gas stream, in actual practice the thermal oxidizer may not be working as expected or desired. For example, the incoming waste gas stream may be flowing too quickly to allow complete oxidation of all the component organic chemicals, or there may be inadequate contact between the waste gas stream and the flame. It is therefore desirable, and often required under pollution control laws, to periodically test the efficiency of a thermal oxidizer. The United States patent specification US 3 841 828 A discloses a system used for determining the efficiency of decontaminating virus exposed exhaust gases.

To calculate the efficiency of a thermal oxidizer, one needs to determine the extent to which incoming organic chemicals are oxidized to carbon dioxide and water. Thus, one needs to know the mass flow rate of the organic chemicals entering the thermal oxidizer. Commonly, and according to procedures set forth by the United States Environmental Protection Agency (EPA), a test chemical. is introduced into a waste gas stream at a point prior to the waste gas stream being subjected to oxidization in the thermal oxidizer, *i.e*., upstream of the thermal oxidizer. The test chemical should be introduced to the gas stream at a known and controllable mass flow rate, which is assumed to be the mass flow rate at which the test chemical enters the thermal oxidizer.

When the test chemical is a gas, one can reasonably assume that the measured rate at which the test chemical enters the gas stream, on the inlet side of a thermal oxidizer, is equal to the actual rate at which the test chemical enters the thermal oxidizer. However, when the test chemical is a liquid, the same assumption may not hold true. For example, according to the prior art, a liquid test chemical may be injected into the inlet waste gas stream by way of an atomizer placed inside the duct that directs a waste gas stream into the thermal oxidizer. This is known as the aspirator technique of introducing liquid test chemical into a waste gas stream. While it is easy to monitor the rate at which the liquid test chemical is sent through the atomizer, one may find, after the efficiency test is completed, that the duct(s) between the atomizer and the thermal oxidizer is covered by droplets, if not pools, of the liquid test chemical. In this situation, one cannot use the measured rate that liquid test chemical is sent into the duct as a basis for determining the efficiency of the oxidizer, because that measured rate is clearly not equal to, and has no known correlation with, the rate that test chemical actually enters the oxidizer.

Based on the foregoing, it can be seen that there is a pressing need in the art for an apparatus and method for reliably introducing a known and controlled rate of liquid test chemical into a thermal oxidizer, so that the efficiency of the thermal oxidizer can be accurately determined.

### Summary of the Invention

Briefly stated, one aspect of the present invention is an arrangement for testing the efficiency of a thermal oxidizer. The apparatus comprises (a) a tank containing at least one liquid test chemical; (b) a vaporizer, in fluid communication with the tank, for vaporizing the at least one liquid test chemical to form test chemical vapor; (c) a thermal oxidizer for oxidizing organic components in a gas stream; (d) a duct in fluid communication with the thermal oxidizer for directing a waste gas stream into an inlet side of the thermal oxidizer, the duct also being in fluid communication with the vaporizer to allow the test chemical vapor and the waste gas stream to form a first mixture in the duct, the mixture entering an inlet side of the thermal oxidizer and exiting an outlet side of the thermal oxidizer having been converted thereby to a clean gas stream; (e) means for measuring a flow rate of the at least one liquid test chemical entering the vaporizer from the tank; and (f) means for measuring a flow rate of the test chemical vapor or oxidation product thereof exiting the thermal oxidizer.

According to another aspect of the invention, an apparatus useful in measuring the efficiency of a thermal oxidizer is provided. The apparatus comprises (i) a tank containing at least one liquid test chemical (ii) a vaporizer, in fluid communication with the tank, for vaporizing the at least one liquid test chemical received from the tank to form test chemical vapor, (c) means for measuring a flow rate of the at least one liquid test chemical entering the vaporizer from the tank; and (d) means for measuring a flow rate of the test chemical vapour or oxidation product thereof exiting the thermal oxidiser.

The invention also provides a process for determining the efficiency of a thermal oxidizer. The process comprises the steps of (a) introducing at least one liquid test chemical into a vaporizer at a measured flow rate over a period of time; (b) vaporizing the test chemical to form test chemical vapor; (c) directing the test chemical vapor into an entry duct of a thermal oxidizer, the duct containing a gas stream which is combined with the test chemical vapor to form a first mixture; (d) directing the first mixture through the entry duct and into an inlet side of the thermal oxidizer; (e) measuring a flow rate of the test chemical vapor or a oxidation product thereof exiting an outlet side of the thermal oxidizer; and (f) calculating the efficiency based on the flow rates of steps (a) and (e).

### Brief Description of the Drawings

The foregoing summary, as well as the following detailed description of the preferred embodiment of the invention, will be better understood when read in conjunction with the appended drawings. For the purpose of illustrating the invention, there is shown in the drawings an embodiment which is presently preferred. It should be understood, however, that the invention is not limited to the precise arrangements and instrumentalities shown.

Like numerals are used to indicate like elements throughout the drawings. In the drawings:
FIG. 1 is a schematic representation of an efficiency tester according to the present invention mounted on a skid according to the invention; and
FIG. 2 is an enlarged cross-sectional view of an injection nozzle of the efficiency tester of FIG. 1.

### Detailed Description of the Preferred Embodiments

Certain terminology is used in the following description for convenience only and is not limiting. The words "above" and "below" designate directions in the drawings to which reference is made. The words "upstream" and "downstream" refer to the direction of the flow of a gas in a passageway, i.e., gas flows from the "upstream" end of a pipe toward the "downstream" end of a pipe. The terminology includes the words above specifically mentioned, derivatives thereof, and words of similar import.

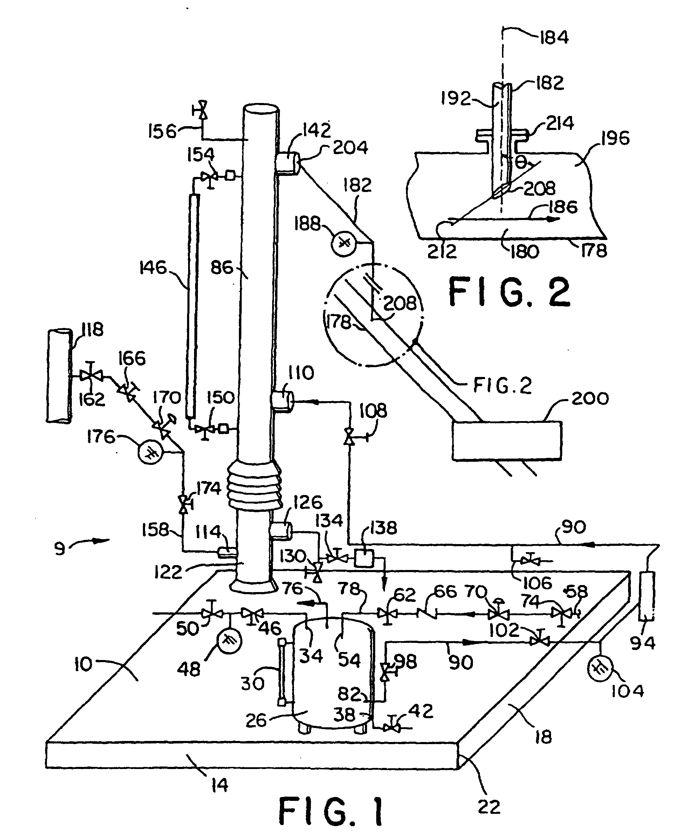

The invention is directed to an apparatus and method useful in determining the efficiency of a thermal oxidizer. A preferred apparatus of the invention, and its operation to test the efficiency of a thermal oxidizer, will now be explained with reference to FIGS. 1 and 2. The apparatus **9** of FIGS. 1 and 2 may be utilized in the United States EPA test Method Nos. 18, 26A and 7D for determining the efficiency of a thermal oxidizer. The disclosures of these EPA test Methods are herein incorporated by reference, in their entirety.

FIG. 1 shows a platform in the form of a skid **10**, to which the other components of the apparatus are directly or indirectly connected. A preferred skid **10** has a length **14** of about 6 feet, a width **18** of about 6 feet, and a height **22** of about 1 foot. The skid **10** preferably contains slots of approximately 8 inch (20 cm) cross-section (not shown) to receive the arms of a forklift, so that the skid **10** can be transported. As the apparatus of the invention typically weighs several hundred pounds, the skid **10** is preferably constructed of a sturdy material, such as, for example, aluminum plate of 1/4 inch thickness. Such a skid may be constructed by Innofab Corp. of Norristown, PA.

It will be understood by one skilled in the art, based on this disclosure, that if portability is not a desired or necessary feature of the apparatus **9**, then the following components could be mounted to concrete or any other solid foundation, to thereby permanently locate the apparatus near a thermal oxidizer. However, an advantage of mounting the below-described components of the apparatus **9** to a skid **10** is that the apparatus **9** is then portable, and can be moved between thermal oxidizers. Because it is not necessary to constantly monitor the efficiency of a thermal oxidizer, a portable testing apparatus **9** according to the invention offers the advantage that it can be relocated to various thermal oxidizers when compliance testing is desired, thus making efficient use of the efficiency tester.

Connected to the skid **10** or other suitable base is a holding tank **26**, preferably having an appended sight gauge **30** as shown. Liquid test chemical (not shown) is stored in the tank **26**, prior to entering a vaporizer **86**. The capacity of the holding tank **26** will depend on the amount of test chemical desirably sent through the vaporizer. For example, a 240 gallon (910 liter) holding tank is satisfactory for use when the test chemical is toluene, while a 135 gallon (510 liter) holding tank is satisfactory when the test chemical is methylene chloride. A preferred holding tank **26** is ASME code pressure rated to a pressure of about 125 psig, and is available from John Wood Co. (Oaks, Pennsylvania).

The sight gauge **30** allows the operator to easily see approximately how much test chemical is in the holding tank **26**. Such a sight gauge **30** suitable for use in the apparatus **9** is available from A.T. Chadwick (Bensalem, PA).

Built into the holding tank **26** is a filling port **34**, through which liquid test chemical may be added to the holding tank **26**, and a drain port **38**, which allows liquid test chemical to be drained from the tank **26**. If the apparatus **9** is portable, the holding tank **26** is preferably drained prior to the apparatus **9** being transported to another site for an efficiency measurement. The drain port **38** is in fluid communication with a ball valve **42**, for opening and closing the drain port **38**. Likewise, the filling port **34** is in fluid communication with a series of two ball valves, **46**, **50**, which flank a pressure indicator **48** that is useful to indicate the chemical fill line pressure. Test chemical may be charged to the holding tank **26** from bulk storage tanks (not shown), using pumps (not shown) and a suitable conduit (not shown) such as, for example, 1/2 inch (1.24.cm) Hytron™ transfer hose. Suitable hosing is available from Airline Hydraulics (Bensalem, PA).

As a thermal oxidizer's efficiency is stated in terms of the effectiveness of the thermal oxidizer at removing a chemical(s) from a waste gas stream, the liquid test chemical used to evaluate the efficiency of the thermal oxidizer is preferably the same or similar to the chemical to be removed. Thus, if the objective is to determine the efficiency of a thermal oxidizer at removing toluene, for example, from a waste gas stream, the preferred test chemical to be used in the apparatus **9** is toluene.

Preferred liquid test chemicals for use in the present invention include toluene and methylene chloride. Toluene is preferred for determining the efficiency of a thermal oxidizer at removing hydrocarbons, and especially aromatic hydrocarbons, from a waste gas stream. Methylene chloride, being a chlorinated hydrocarbon, is preferred for determining the efficiency of a thermal oxidizer at removing chlorinated hydrocarbons from a waste gas stream. A liquid test chemical according to the invention may also be a mixture of liquid test chemicals, *e.g.*, a mixture of toluene and methylene chloride.

While toluene and methylene chloride are preferred liquid test chemicals, other suitable liquid test chemicals include, for example and without limitation, amyl alcohol, butyl acetate, butyl alcohol, chloral, cyclohexanone, decane, ethyl benzene, furfural alcohol, isoamyl alcohol, isoamyl acetate, isobutyl alcohol, isobutyl acetate, methyl isobutyl ketone, tetrahydrofuran and xylene.

According to the invention, the holding tank **26** is in fluid communication with vaporizer **86**, and there is (1) a forcing means for forcing the liquid test chemical from the holding tank **26** into the vaporizer **86** in a continuous, controllable and rate-determinable manner, and (2) a controlling means for controlling the flow rate of the liquid test chemical entering the vaporizer **86** from the holding tank **26**.

In a preferred embodiment of the invention, the forcing means preferably includes a pressurized gas, such as from a cylinder, venturi valve, blower or similar apparatus for providing pressurized gas. The pressurized gas is preferably from a cylinder of gas, preferably nitrogen gas from a cylinder at location **58** (gas cylinder not shown). When the efficiency tester is in operation, the pressured gas impinges on liquid test chemical situated in the holding tank **26**. The pressurized gas exerts force on the liquid test chemical, causing the chemical to be expelled from the tank **26**, run through piping **90**, and enter the vaporizer **86.** Thus, the pressurized gas is in fluid communication with, and upstream of, the liquid test chemical.

According to the preferred embodiment shown in FIG. 1, the holding tank **26** includes a port **54** to provide for fluid communication between the tank **26** and a source of pressurized gas (not shown) at location **58** via piping **78**. The pressurized gas is preferably nitrogen but may also be compressed air, and preferably is capable of exerting at least about 35 psig pressure (241.36 kPa) on the test chemical. About 5 to about 10 psig (34.48 - 68.96 kPa) pressure is sufficient to provide a test chemical entry rate, into the vaporizer **86**, of about 200 lb/hr (about 90 kg/hr) for methylene chloride, and about 600 lb/hr (about 270 kg/hr) for toluene. Suitable vaporizer **86** entry flow rates for the liquid test chemical according to the present invention range from about 35 kg/hr to about 500 kg/hr, depending on the design of the vaporizer.

Forcing means other than pressurized gas may be employed according to the invention, for forcing liquid test chemical into the vaporizer **86**. For example, the tank **26** of liquid test chemical may be held at an altitude above the vaporizer **86**, so that gravity can be exploited to provide sufficient forcing energy. Another suitable forcing means is a pump that is situated in the piping **90** that runs from the holding tank **26** to the vaporizer **86**. Based on this disclosure, one skilled in the art will understand that other forcing means may be used in the present invention as long as the forcing means provides sufficient constant energy to force test chemical from the tank **26** through piping **90** to vaporizer **86**.

The controlling means preferably includes a valve, such as valve **70**, preferably positioned between the holding tank **26** and the gas cylinder (not shown) at position **58**, which allows the pressure exerted on the liquid test chemical to be controlled. The valve preferably serves as the controlling means for controlling the flow rate of the liquid test chemical entering the vaporizer **86**.

According to the preferred apparatus 9 shown in FIG. 1, valves **62**, **66**, **70** and **74** are positioned in pipe **78**. Valve **66** is a check valve, used help prevent liquid test chemical from flowing backward and entering the source of pressurized gas (not shown) located at position **58**. Globe valve **70** is a pressure control valve, which can regulate the pressure of gas exiting the cylinder (not shown) at position **58**, to allow for a suitable and controllable pressure to be exerted against the liquid test chemical. Ball valves **62** and **74** are preferably present in order to allow control valve **70** to be isolated for repair and adjustments as necessary.

Also connected to the holding tank **26**, according to a preferred embodiment of the invention, is a pressure relief valve **76**, that may be used to relieve any excess pressure that builds up in the holding tank **26**. The relief valve **76** preferably has a pressure rating of 40-45 psig (275.8 - 310.3 kPa).

Also built into the holding tank **26** is an exit port **82**, which is preferably in fluid communication with the vaporizer **86**. Installed in-line with piping **90**, where piping **90** connects the tank **26** to the vaporizer **86**, is a means for measuring the flow rate at which liquid test chemical enters the vaporizer **86**. A preferred measuring means is a flowmeter **94** as shown in FIG. 1, positioned in-line with piping **90**. The flowmeter **94** measures the flow rate of the liquid test chemical in piping **90** exiting the holding tank **26** and entering the vaporizer **86**.

It should be understood from this discussion that any suitable flowmeter for monitoring the flow rate of liquid test chemicals may be used with the present invention. Preferably, a floating ball flowmeter, or rotameter, is used as the flowmeter in the present invention. Such a flowmeter is available as Model 1110 from. Brooks Instruments (Ambler, PA). Preferably, the flowmeter responds to changes in the temperature of the fluid passing through the meter, and has a design accuracy of ± 2% of the calibrated flow rate. Thus, the flowmeter is preferably calibrated for the specific test chemical being employed.

Suitable piping, such as piping **78** and **90**, that may be used throughout the apparatus as shown in FIGS. 1 and 2, is Schedule 40 carbon steel having 1.5 inches (3.8 cm) fiberglass insulation. The pipe preferably has an inner diameter (ID) sufficient to allow about **70** lb/hr to about 210 lb/h of liquid test chemical to pass through the pipe. Preferably in-line with piping **90** that leads from the exit port **82** to the flowmeter **94** are two ball valves, **98** and **102** as well as a pressure indicator **104**. Valve **98** allows for the chemical flow from tank **26** to be shut off in an emergency. Valve **102** is used to adjust and maintain a steady flow of liquid test chemical into the flow meter **94**. A drain valve **106** is positioned in the piping **90** between the flowmeter **94** and the vaporizer **86.** The drain valve **106**, when open, allows for liquid test chemical to be drained from the piping **90**. Another valve, **108**, is preferably placed in-line with piping **90** at a site just before the piping **90** is connected to the vaporizer **86**. The valve **108** allows for quick shut off of the test chemical to the vaporizer **86**, and eliminates the need to readjust valve **102** during shut down and start up of the thermal oxidizer efficiency test procedure.

The vaporizer **86** is capable of converting liquid test chemical, *i.e*., an organic chemical in a liquid state that will be used to test the efficiency of the thermal oxidizer, to test chemical vapor, *i.e*., vaporized liquid test chemical. It will be understood from this disclosure that any suitable vaporizer may be used in the present invention. Preferably, the vaporizer **86** contains an entry port for introducing the liquid test chemical into the vaporizer, a chamber wherein the liquid test chemical is converted to test chemical vapor, and an exit port for the exit of test chemical vapor from the vaporizer. As shown in FIG. 1, the longitudinal axis of the vaporizer **86** is preferably perpendicular to the plane in which the skid **10** or other platform lies. However, the longitudinal axis of the vaporizer may also be situated parallel to the plane in which the skid **10** or other platform lies.

As shown in FIG. 1, the vaporizer **86** contains a first entry port **110**, in fluid communication with the holding tank **26**, and a second entry port **114,** in fluid communication with a source of steam **118.** The first entry port **110** allows for the introduction of liquid test chemical into the vaporizer. The base **122** of the vaporizer **86** is preferably connected to the skid **10**. More preferably, the vaporizer **86** is bolted or welded to the skid **10**. Proximate to the base **122** is a drain port **126**, in fluid communication with valves **130** and **134**, and steam trap **138**. The valve system **130** and **134** is useful to provide a quick heat-up of the vaporizer. Thus, valve 134 may be closed, then valve 130 opened, condensate quickly blown through valve **130**, and after quick heat-up has been achieved, valve **130** is closed and valve **134** opened to the steam trap for normal operation. The vaporizer **86** also contains an exit port **142**, through which a stream of test chemical vapor in combination with steam, may exit.

A preferred vaporizer incorporates a sight gauge **146**, which is a piece of pipe preferably appended to the outside of the vaporizer **86**, and parallel to the longitudinal axis of the vaporizer as shown in FIG. 1, much like a handle runs along the outside of a mug. Suitable sight gauges have a transparent region to allow an operator to see the level of chemical liquid and/or vapor that is inside the vaporizer. The sight gauge preferably runs from a site just above the entry port **110** for the liquid test chemical, and extends to a site just below the exit port **142** for the test chemical vapor. A sight gauge so situated allows an operator to see what is happening along a substantial length of the vaporizer **86**, particularly in the region of the vaporizer **86** where the liquid test chemical is converted to a stream of test chemical vapor.

As shown in FIG. 1, the sight gauge **146** is connected to the vaporizer **86** through a lower valve **150** and an upper valve **154**. The valve **150** is preferably positioned longitudinally between the first and second entry ports, **110** and **114**, respectively. The upper valve **154** is preferably positioned approximately opposite the exit port **142**. The diameter of the sight gauge is not critical. However, in a preferred embodiment of the invention, a diameter of about 1 inch (2.54 cm) is suitable for the sight gauge.

The second entry port **114** is in fluid communication with a source of steam **118** by way of piping **158**. The piping **158** preferably has an inner diameter of about 1.5 inches (3.8 cm), and is capable of carrying steam having a pressure of at least about **80** to about 110 psig (about 550 to about 750 kPa). Valves **162** (hand valve), **166** (hand valve), **170** (pressure control valve), and **174**, are positioned in-line the piping **158**, and serve to control the pressure and flow of steam between the source of steam **118** and the second entry port **114** of the vaporizer **86**. A pressure indicator **176** is positioned in-line with the pipe **158**, between the valves **170** and **174**. Preferably, the steam enters the vaporizer through the second entry port **114** at a pressure of about 15 to about 35 psi (about 100 to about **230** kPa) as regulated by valve **170**. The preferred steam pressure is determined by the liquid test chemical used and the rate the liquid test chemical enters the vaporizer. Higher steam pressures are preferred for liquid test chemicals that have high boiling points. Valve **156**, which extends from the top of the vaporizer **86**, is a manual air release vent valve.

A preferred vaporizer **86** according to the invention is configured for providing contact between the liquid test chemical and steam from the source **118** of pressurized steam. When the steam contacts the liquid test chemical, the liquid test chemical is converted to test chemical vapor, thus forming a mixture of steam and test chemical vapor within the vaporizer. While the preferred vaporizer of the invention employs steam as an energy source to convert test chemical from a liquid to a vapor state, alternative energy sources may be employed, with appropriate changes to the vaporizer **86**. For example, the vaporizer **86** might employ a heated coil (not shown) that extends through the vaporization chamber (not shown), so that liquid test chemical that comes into contact with the coil will be heated and converted into vapor. Gas, oil and electric (resistance) heating may all be employed in a vaporizer useful in the invention.

Materials useful in the construction of vaporizers are well known in the art, and any such materials are suitable for preparing a vaporizer according to the instant invention. Preferred construction materials are largely or completely inert, *i.e*., substantially unreactive with, both liquid test chemical and test chemical vapor, under the conditions employed within the vaporizer. Suitable materials include, for example, stainless steel, carbon steel, monel, nickel or other metals or metal alloys, polyvinylchloride or other plastics, glass, etc., as well as composites thereof.

Suitable vaporizers may be obtained from many suppliers. The Thomas Register (1995 Edition), under the heading "vaporizers", lists various manufacturers, located throughout the United States, that can provide suitable vaporizers. The preferred vaporizers **86** of the invention are those vaporizers capable of converting liquid organic solvents to solvent vapor in a continuous fashion, *i.e.*, the vaporizer **86** is preferably a continuous vaporizer, where a continuous vaporizer simultaneously accepts an incoming stream of liquid test chemical and expels a vapor stream of test chemical, so that the mass flow rate at which the test chemical enters the vaporizer is substantially equal to the mass flow rate at which the test chemical leaves the vaporizer **86** through the exit port **142**.

A preferred vaporizer **86** according to the invention is available from Armstrong Engineering Associates, Inc. (West Chester, PA), as their "D" standard model vaporizer, and has the ability to vaporize about 700-840 pounds/hour of toluene, entering the vaporizer as liquid at about 50°F, wherein the heating medium is saturated steam at up to about 75 psig (517 kPa) and about 320°F, and wherein the leaving vapor has a temperature of about 250°F. Such a vaporizer has an outer diameter of about 8 inches (about 20 cm) and a length of about 86 inches (about 220 cm)-. By increasing the steam pressure, a maximum throughput of methylene chloride of about 840 lb/hr may be achieved.

The apparatus of the invention, as best shown in FIG. 2, has a pipe **182** running from the exit port **142** of the vaporizer **86** and terminating within the passageway **196** of a duct **178** that directs a waste gas stream into a thermal oxidizer **200**. The duct **178** has a wall **180** that defines the passageway 196 through which the waste stream flows on its way to the thermal oxidizer. The passageway **196** extends longitudinally through the duct, and has an upstream end and a downstream end, where the arrow **186** in FIG. 2 points toward the downstream end, and where the downstream end is defined as being closer to the thermal oxidizer than the upstream end of the passageway **196**. A pump or fan (not shown) is typically present in the duct in order to draw waste gas stream through the thermal oxidizer.

The pipe **182** has a longitudinal axis **184**, an exterior surface **192**, a first end **204** connected to the exit port **142** of the vaporizer and an open second end **208** terminating within the passageway **196** of the duct **178**. The pipe **182** extends through the wall **180** of the duct **178** by way of a flange **214** which may already be present as part of the duct **178** or may need to be added to allow the pipe **182** to extend through the wall **180**. The pipe **182** preferably extends upward from the vaporizer **86** to the duct **178**. The pipe **182** preferably has a valve (not shown) positioned in line of the pipe **182** near the vaporizer exit port **142**, which may be opened prior to beginning an efficiency test in order to establish that no liquid is present in the pipe **182** prior to beginning the efficiency test.

The open end **208** of the pipe **182** terminates in an open angled planar end face **212**. Preferably, the planar end face **212** is oriented in such a way that it is directed toward the downstream end of the passageway **196**, as shown in Fig. 1. Preferably, the angled end face **212** forms an acute angle θ of about 50 to about 75 degrees, and more preferably about **60** degrees with respect to the longitudinal axis **184** of the pipe. The preferred angled end face according to the invention increases the turbulence of the gas flow in the duct, and thus provides a better mix pattern for entainment of the test chemical vapor in the waste gas stream.

A temperature gauge **188** or similar temperature monitoring device is preferably placed so as to monitor the temperature of the vapor flowing in the pipe **182**. The inner diameter of the pipe **182** may be about **2** inches (about 5 cm) when methylene chloride is the test chemical, and about 3 inches (about 7.6 cm) when toluene is the test chemical. The diameter of the pipe will vary depending on the identity of the test chemical, due to differences in the density and vapor pressure of the various test chemicals. In general, the pipe diameter should be selected in view of the identity of the test chemical, as well as the flow rate and pressure drop that is desired, which in turn will depend on the pump or fan selected to optimize system design.

When the liquid test chemical enters the vaporizer **86**, it contacts steam and thus forms a second mixture comprising test chemical vapor and steam. The second mixture exits the vaporizer through port **142**, travels through pipe **182** and enters the duct **178** on the inlet side of a thermal oxidizer **200**. The duct **178** carries a waste gas stream, and when the waste gas stream contacts the second mixture, a first mixture is produced comprising test chemical vapor, steam and the waste gas stream. The first mixture is then directed into the inlet side of a thermal oxidizer. Upon passing through the thermal oxidizer, the first mixture is converted into a clean gas stream. Depending on the efficiency of the thermal oxidizer, the clean gas stream may contain residual test chemical vapor, and/or may contain the oxidation products formed from the test chemical vapor. Thus, if the thermal oxidizer is a the combustion products of hydrocarbons, which will typically include water and carbon dioxide. Hydrochloric acid may also be an oxidation product in instances where the test chemical vapor and/or waste gas stream contains chlorinated hydrocarbons.

Thermal oxidizers are well known pollution control devices, commonly used to treat effluent gases contaminated with combustible impurities. They operate by taking impurity-laden gas to high temperatures, in the presence of oxygen, to thereby cause the combustion of the impurity and produce purified gas. Thermal oxidizers are often employed where the impurity in the gas is organic, and thus readily susceptible to combustion. Thus, during operation, the thermal oxidizers of the invention have an inlet side (not shown), for receiving impurity-containing gas, and an outlet side (not shown), for releasing the treated gas. Any thermal oxidizer known in the art may be used according to the invention, and a thermal oxidizer that passes impurity-laden gas through a flame, known as a flame thermal oxidizer, is well-suited to the inventive method.

In one embodiment, the inventive apparatus **9** is portable and does not include a thermal oxidizer. This embodiment is advantageous in that it may be separated from a thermal oxidizer. The portable apparatus **9** is sufficiently small that it can be transported between thermal oxidizers when an efficiency test is necessary. Also, when the apparatus **9** is being transported, it need not include a forcing means for forcing the liquid test chemical into the vaporizer, such as is provided by the source of pressurized gas (not shown) located at position **58**. This is because the portable apparatus may be connected to a source of pressurized gas, or other forcing means, which is available at the site to which the portable apparatus is taken.

The apparatus **9** of the invention may be employed to test the efficiency of thermal oxidizers according to EPA test procedures, and in particular as set forth in EPA Reference Methods 18, 26A and 7D. However, the method of the invention is not limited to use in these particular test methods.

According to a preferred method, prior to beginning an efficiency determination, the entire apparatus shown in FIG. 1 is purged with nitrogen. Then, after ensuring that the drain valves **42**, **106**, **130** and **134** are closed, the holding tank **26** is filled with a liquid test chemical, *e.g*., toluene or methylene chloride. Nitrogen gas at a pressure of about 5 to about 10 psig (about 35 to about **70** kPa) is then delivered from source (not shown) located at position **58** through port **54**, thus driving liquid test chemical through port **82** and piping **90** and into the vaporizer **86** by way of the first entry port **110**. When toluene is the test chemical, a flow rate of about 600 pounds/hour (about 270 Kg/hr) has been satisfactorily employed, while a flow rate of about 200 pounds/hour (about 90 Kg/hr) has been found satisfactory when methylene chloride is the test chemical. Sufficient test chemical is delivered into the vaporizer to fill the vaporizer about one half full of liquid test chemical.

Steam from source **118** is then directed through the second entry port **114** of the vaporizer **86**, which causes heating and vaporization of the liquid test chemical. A steam pressure of about 5 to about 25 psi (about 35 to about 175 kPa) is suitable when the test chemical is methylene chloride, while a higher pressure of about 20 to about 40 psi (about 140 to about 280 kPa) is suitable when the test chemical is toluene, due to the higher boiling point of toluene. Gradually, the liquid test chemical level will go down, as seen through the sight gauge **146**. Additional test chemical is slowly added to the vaporizer, so that the mass being transferred from the holding tank **26** is equal to the mass being expelled from the vaporizer **86** through the port **142**. The equilibrium point may take some trial and error to reach, with variation in test chemical flow rate and steam pressure being the main parameters that will need adjusting.

An LEL monitor may be used to assist in determining the proper flow rates and pressures to provide a steady state flow. An LEL monitor is a safety device that constantly monitors the process air stream and records/shows the concentration of the gases in the duct. For example, it is useful so that an operator can be appraised if the concentration of any vapor in the gas stream is approaching the lower explosion concentration limit of that vapor. Preferably, compliance testing should not commence until after an equilibrium has been established.

The test chemical/steam mixture (the second mixture) exits the vaporizer through exit port **142**, travels through the piping **182**, and enters the duct **178** through the end **208** of the pipe **182.** The temperature of the material in the line **182**, which leads to the duct **178**, should be monitored periodically, using the temperature gauge **188**, to make certain that the temperature within pipe **182** does not fall below the boiling point temperature of the test chemical, which is, for example, 106°F (40 °C) for methylene chloride and 230°F (110 °C) for toluene. If the temperature in the pipe **182** falls below the lower limit, an unsteady flow rate for the test chemical vapor will result. If the temperature within the pipe **182** begins to get undesirably low, then the steam pressure through the vaporizer can be increased. The end **208** of the pipe **182** preferably terminates in about the middle of the passageway **196** of the duct **178**, where the duct **178** carries a waste gas stream to a thermal oxidizer. Thus, if the duct **178** has a diameter of about 36 inches, the pipe **182** will extend about 18 inches into the duct.

After being admixed with steam and test chemical vapor, the waste gas stream becomes a first mixture. The first mixture enters the thermal oxidizer, and then exits as a clean gas stream, having been purged of at least some organic impurities that were present in the waste gas stream and first mixture. The exiting gas may have a residual amount of test chemical vapor. The amount of test chemical vapor present in the first mixture, and the amount of test chemical vapor or oxidation product thereof in the clean gas stream, are determined and the efficiency of the thermal oxidizer may then calculated.

Determination of the amount of test chemical vapor or oxidation product thereof in the clean gas stream requires application of a means (not shown) for measuring a flow rate of the test chemical vapor or oxidation product thereof exiting the thermal oxidizer. Thus, the apparatus **9** of the invention provides a means for measuring a flow rate of test chemical vapor or oxidation product thereof exiting the thermal oxidizer, where a suitable means is set forth in EPA Reference Methods 18, 26A and 7D. However, the method of the invention is not limited to use in these particular means for measuring a flow rate of the test chemical vapor or oxidation product thereof exiting the thermal oxidizer.

In an actual operation, three 1-hour tests were conducted at 1,500°F operating temperature. Direct gas chromatography, in accordance with 40 CFR 60, Appendix A, Reference Manual 18 of the EPA was used to determine the emissions of carbon tetrachloride, methylene chloride, toluene, methanol, isopropanol and ethyl acetate. In a representative test run, methylene chloride in the inlet gas stream (first mixture) was 190.6 lb/hr, and methylene chloride in the stack gases (in the clean gas stream exiting the thermal oxidizer) was 0.79 lb/hr, indicating that methylene chloride was combusted at a rate of 189.81 lb/hr. As 85 grams of methylene chloride are consumed through oxidation for every 73 grams of hydrochloric acid produced, the amount of hydrochloric acid produced through this test run was 163.0 lb/hr. The measured amount of hydrochloric acid in the clean gas stream was 0.44 lb/hr. Thus, the acid removal efficiency is equal to [(163.0-0.44)/163.0] x 100 = 99.7%.

The apparatus and test method of the invention provide a reliable way to introduce a known mass flow rate of liquid test chemical into a thermal oxidizer, so that the efficiency of a thermal oxidizer may be accurately determined. Heretofore, measurements of thermal oxidizer efficiencies, using liquid test chemicals, have been subject to undesirable error due to uncertainty regarding the amount of test chemical that actually entered the thermal oxidizer.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the scope of the present invention as defined by the appended claims.

## Claims

1. An arrangement for testing the efficiency of a thermal oxidizer (200) comprising:
(a) a tank (26) containing at least one liquid test chemical;
(b) a vaporizer (86), in fluid communication with the tank, for vaporizing the at least one liquid test chemical to form test chemical vapor;
(c) a thermal oxidizer (200) for oxidizing organic components in a gas stream;
(d) a duct (178) in fluid communication with the thermal oxidizer (200) for directing a waste gas stream into an inlet side of the thermal oxidizer, the duct also in fluid communication with the vaporizer to allow the test chemical vapor and the waste gas stream to form a first mixture in the duct, the first mixture entering an inlet side of the thermal oxidizer (200), being converted within the thermal oxidizer to a clean gas stream, and then exiting an outlet side of the thermal oxidizer as the clean gas stream;
(e) means (94) for measuring a flow rate of the at least one liquid test chemical entering the vaporizer from the tank; and
(f) means (not shown) for measuring a flow rate of the test chemical vapor or oxidation product thereof exiting the thermal oxidizer.

2. The arrangement of claim 1 further comprising forcing means (58) for forcing the at least one liquid test chemical from the tank into the vaporizer, and controlling means (70) for controlling the flow rate of the at least one liquid test chemical entering the vaporizer.

3. The arrangement of claim 2 wherein the forcing means (58) comprises a pressurized gas in fluid communication with, and upstream of, the at least one liquid test chemical.

4. The arrangement of claim 1 wherein the vaporizer (86) is in fluid communication with a source (118) of pressurized steam, and the vaporizer (86) is configured for providing contact between the at least one liquid test chemical and steam from the source of pressurized steam (118) to form a second mixture comprising test chemical vapor and steam within the vaporizer.

5. The arrangement of claim 4 wherein the duct (178) has a wall (180) defining a passageway (196) extending longitudinally through the duct (178), the passageway (196) has an upstream end and a downstream end where the downstream end is defined as being closer to the thermal oxidizer (200) than the upstream end, the vaporizer (86) comprises an exit port (142) for releasing the second mixture from the vaporizer, and the apparatus further comprises a pipe (182) having a longitudinal axis (184), an exterior surface (192), a first end (204) connected to the exit port (142) of the vaporizer and an open second end (208) and extending through the wall (180) and terminating within the passageway (196).

6. The arrangement of claim 5 wherein the open end (208) of the pipe (182) terminates in an open angled planar end face (212) oriented in such a way that the open angled planar end face is directed toward the downstream end of the passageway (196).

7. Apparatus (9) for testing the efficiency of a thermal oxidizer (200) comprising:
(a) a tank (26) containing at least one liquid test chemical;
(b) a vaporizer (86), in fluid communication with the tank, for vaporizing the at least one liquid test chemical to form a test chemical vapor;
(c) means (94) for measuring a flow rate of the at least one liquid test chemical entering the vaporizer from the tank; and
(d) means for measuring a flow rate of the test chemical vapour or oxidation product thereof existing the thermal oxidsiser (200);
wherein the apparatus is adapted for connection to an inlet side of the thermal oxidizer to allow flow of the test chemical vapor into the inlet side of the thermal oxidizer.

8. Apparatus (9) according to claim 7 additionally modified to render it portable comprising:
(a) a platform (10), the platform having directly or indirectly mounted thereto:
(i) a tank (26) holding at least one liquid test chemical;
(ii) a vaporizer (86), in fluid communication with the tank, for vaporizing the at least one chemical received from the tank to form test chemical vapor; and
(b) means (94) for measuring a flow rate of the at least one liquid test chemical entering the vaporizer from the tank;
wherein the apparatus (9) is adapted for connection to an inlet side of the thermal oxidiser to allow flow of the chemical vapor into the inlet side of the thermal oxidizer.

9. The apparatus of any of claims 7 or 8 further comprising forcing means (58) for forcing the at least one liquid test chemical from the tank into the vaporizer (86), and controlling means (70) for controlling the flow rate of the at least one liquid test chemical.

10. The apparatus of any of claims 7 or 8 wherein the vaporizer (86) further comprises an exit port (142) for releasing the test chemical vapor from the vaporizer, and the apparatus further comprises an entry duct appended to an inlet side of the thermal oxidizer for providing fluid communication between the vaporizer and the entry duct, and a pipe (182) having a longitudinal axis (184), a first end (204) connected to the exit port (142) of the vaporizer and a second end (208) terminating in an open end face lying in a plane, the second end extending into a passageway (196) of the entry duct (178).

11. A process for determining the efficiency of a thermal oxidizer (200), comprising the steps of:
(a) introducing at least one liquid test chemical into a vaporizer (86) at a measured flow rate over a period of time;
(b) vaporizing the test chemical to form test chemical vapor;
(c) directing the test chemical vapor into an entry duct of a thermal oxidizer (200), the duct containing a waste gas stream which is combined with the test chemical vapor to form a first mixture;
(d) directing the first mixture through the entry duct and into an inlet side of the thermal oxidizer (200);
(e) measuring a flow rate of the test chemical vapor or oxidation product thereof exiting an outlet side of the thermal oxidizer;
(f) calculating the efficiency based on the flow rates of steps (a) and (e).

## Patentansprüche

1. Anordnung zur Prüfung des Wirkungsgrades einer thermischen Oxidationsvorrichtung (200), die aufweist:
(a) einen Behälter (26), der mindestens eine flüssige Testchemikalie enthält;
(b) einen Verdampfer (86) in Fluidverbindung mit dem Behälter zum Verdampfen der mindestens einen flüssigen Testchemikalie, um Testchemikaliendampf zu erzeugen;
(c) eine thermische Oxidationsvorrichtung (200) zum Oxidieren organischer Komponenten in einem Gasstrom;
(d) ein Rohr (178) in Fluidverbindung mit der thermischen Oxidationsvorrichtung (200), um einen Abgasstrom in eine Einlaßseite der thermischen Oxidationsvorrichtung einzuleiten, wobei das Rohr auch in Fluidverbindung mit dem Verdampfer steht, um die Bildung eines ersten Gemischs aus dem Testchemikaliendampf und dem Abgasstrom in dem Rohr zu ermöglichen, wobei das erste Gemisch in eine Einlaßseite der thermischen Oxidationsvorrichtung (200) eintritt, innerhalb der thermischen Oxidationsvorrichtung in einen Reingasstrom umgewandelt wird und dann als Reingasstrom aus einer Auslaßseite der thermischen Oxidationsvorrichtung austritt;
(e) eine Einrichtung (94) zur Messung einer Strömungsgeschwindigkeit der vom Behälter in den Verdampfer eintretenden mindestens einen flüssigen Testchemikalie; und
(f) eine Einrichtung (nicht dargestellt) zur Messung einer Strömungsgeschwindigkeit des aus der thermischen Oxidationsvorrichtung austretenden Testchemikaliendampfs oder seines Oxidationsprodukts.

2. Anordnung nach Anspruch 1, die ferner aufweist: eine Druckeinrichtung (58), um die mindestens eine flüssige Testchemikalie aus dem Behälter in den Verdampfer zu pressen, und eine Steuereinrichtung (70), um die Strömungsgeschwindigkeit der in den Verdampfer eintretenden mindestens einen flüssigen Testchemikalie zu steuern.

3. Anordnung nach Anspruch 2, wobei die Druckeinrichtung (58) in Fluidverbindung mit und stromaufwärts von der mindestens einen flüssigen Testchemikalie ein Druckgas aufweist.

4. Anordnung nach Anspruch 1, wobei der Verdampfer (86) in Fluidverbindung mit einer Druckdampfquelle (118) steht und der Verdampfer (86) so konfiguriert ist, das er die mindestens eine flüssige Testchemikalie und den Dampf aus der Druckdampfquelle (118) in Kontakt miteinander bringt, um innerhalb des Verdampfers ein zweites Gemisch zu bilden, das Testchemikaliendampf und Dampf aufweist.

5. Anordnung nach Anspruch 4, wobei das Rohr (178) eine Wand (180) aufweist, die einen Durchflußweg (196) definiert, der sich in Längsrichtung durch das Rohr (178) erstreckt, wobei der Durchflußweg (196) ein stromaufwärts und ein stromabwärts liegendes Ende aufweist, wobei das stromabwärts liegende Ende näher an der thermischen Oxidationsvorrichtung (200) definiert ist als das stromaufwärts liegende Ende, wobei der Verdampfer (86) eine Austrittsöffnung (142) zur Abgabe des zweiten Gemischs aus dem Verdampfer aufweist, und wobei die Vorrichtung ferner ein Rohr (182) mit einer Längsachse (184), einer Außenfläche (192), einem mit der Austrittsöffnung (142) des Verdampfers verbundenen ersten Ende (204) und einem offenen zweiten Ende (208) aufweist und durch die Wand (180) hindurchgeht und innerhalb des Durchflußwegs (196) endet.

6. Anordnung nach Anspruch 5, wobei das offene Ende (208) des Rohrs (182) in einer offenen, abgewinkelten, ebenen Endfläche (212) endet, die so ausgerichtet ist, daß die offene abgewinkelte Endfläche zum stromabwärts liegenden Ende des Durchflußwegs (196) gerichtet ist.

7. Vorrichtung (9) zur Prüfung des Wirkungsgrades einer thermischen Oxidationsvorrichtung (200), die aufweist:
(a) einen Behälter (26), der mindestens eine flüssige Testchemikalie enthält;
(b) einen Verdampfer (86) in Fluidverbindung mit dem Behälter zum Verdampfen der mindestens einen flüssigen Testchemikalie, um Testchemikaliendampf zu erzeugen;
(c) eine Einrichtung (94) zur Messung einer Strömungsgeschwindigkeit der vom Behälter in den Verdampfer eintretenden mindestens einen flüssigen Testchemikalie; und
(d) eine Einrichtung zur Messung einer Strömungsgeschwindigkeit des aus der thermischen Oxidationsvorrichtung (200) austretenden Testchemikaliendampfs oder seines Oxidationsprodukts;
wobei die Vorrichtung für den Anschluß an eine Einlaßseite der thermischen Oxidationsvorrichtung angepaßt ist, um den Testchemikaliendampf in die Einlaßseite der thermischen Oxidationsvorrichtung einströmen zu lassen.

8. Vorrichtung (9) nach Anspruch 7, die außerdem zu einer tragbaren Vorrichtung modifiziert ist und aufweist:
(a) eine Plattform (10), wobei an der Plattform direkt oder indirekt montiert sind;
(i) ein Behälter (26), der mindestens eine flüssige Testchemikalie enthält;
(ii) einen Verdampfer (86) in Fluidverbindung mit dem Behälter zum Verdampfen der vom Behälter empfangenen mindestens einen flüssigen Testchemikalie, um Testchemikaliendampf zu erzeugen; und
(b) eine Einrichtung (94) zur Messung einer Strömungsgeschwindigkeit der vom Behälter in den Verdampfer eintretenden mindestens einen flüssigen Testchemikalie;
wobei die Vorrichtung (9) für den Anschluß an die Einlaßseite der thermischen Oxidationsvorrichtung angepaßt ist, um den Testchemikaliendampf in die Einlaßseite der thermischen Oxidationsvorrichtung einströmen zu lassen.

9. Vorrichtung nach einem der Ansprüche 7 oder 8, die ferner aufweist: eine Druckeinrichtung (58), um die mindestens eine flüssige Testchemikalie aus dem Behälter in den Verdampfer (86) zu pressen, und eine Steuereinrichtung (70), um die Strömungsgeschwindigkeit der mindestens einen flüssigen Testchemikalie zu steuern.

10. Vorrichtung nach einem der Ansprüche 7 oder 8, wobei der Verdampfer (86) ferner eine Austrittsöffnung (142) zur Abgabe des Testchemikaliendampfs aus dem Verdampfer aufweist, und wobei die Vorrichtung ferner ein Eintrittsrohr, das zur Herstellung einer Fluidverbindung zwischen dem Verdampfer und dem Eintrittsrohr an der Einlaßseite der thermischen Oxidationsvorrichtung angebracht ist, und ein Rohr (182) mit einer Längsachse (184), einem mit der Austrittsöffnung (142) des Verdampfers verbundenen ersten Ende (204) und einem zweiten Ende (208) aufweist, das in einer offenen Endfläche endet, die in einer Ebene liegt, wobei sich das zweite Ende in einen Durchflußweg (196) des Eintrittsrohrs (178) erstreckt.

11. Verfahren zur Bestimmung des Wirkungsgrades einer thermischen Oxidationsvorrichtung (200), mit den folgenden Schritten:
(a) Einleiten mindestens einer ersten flüssigen Testchemikalie während einer Zeitspanne mit einer gemessenen Strömungsgeschwindigkeit in einen Verdampfer (86);
(b) Verdampfen der Testchemikalie zur Bildung von Testchemikaliendampf;
(c) Einleiten des Testchemikaliendampfs in ein Eintrittsrohr einer thermischen Oxidationsvorrichtung (200), wobei das Rohr einen Abgasstrom enthält, der mit dem Testchemikaliendampf zu einem ersten Gemisch vereinigt wird;
(d) Durchleiten des ersten Gemischs durch das Eintrittsrohr und Einleiten in eine Einlaßseite der thermischen Oxidationsvorrichtung (200);
(e) Messung der Strömungsgeschwindigkeit des aus einer Auslaßseite der thermischen Oxidationsvorrichtung austretenden Testchemikaliendampfs oder seines Oxidationsprodukts;
(f) Berechnen des Wirkungsgrades auf der Basis der in den Schritten (a) und (e) gemessenen Strömungsgeschwindigkeiten.

## Revendications

1. Agencement pour tester l'efficacité d'un dispositif d'oxydation thermique (200), comportant :
(a) un réservoir (26) contenant au moins un produit chimique liquide de test,
(b) un vaporisateur (86), en communication de fluide avec le réservoir, pour vaporiser le au moins un produit chimique liquide de test pour former une vapeur chimique de test,
(c) un dispositif d'oxydation thermique (200) destiné à oxyder des composants organiques dans un flux gazeux,
(d) un conduit (178) en communication de fluide avec le dispositif d'oxydation thermique (200) pour diriger un flux de gaz perdu vers un côté d'entrée du dispositif d'oxydation thermique, le conduit étant également en communication de fluide avec le vaporisateur pour permettre à la vapeur chimique de test et au flux de gaz perdu de former un premier mélange dans le conduit, le premier mélange entrant dans un côté d'entrée du dispositif d'oxydation thermique (200), étant transformé en un flux gazeux propre dans le dispositif d'oxydation thermique, et ensuite sortant d'un côté de sortie du dispositif d'oxydation thermique en tant que flux gazeux propre,
(e) des moyens (94) pour mesurer un débit d'écoulement du au moins un produit chimique liquide de test entrant dans le vaporisateur à partir du réservoir, et
(f) des moyens (non-représentés) pour mesurer un débit d'écoulement de la vapeur chimique de test, ou du produit d'oxydation de celle-ci, sortant du dispositif d'oxydation thermique.

2. Agencement selon la revendication 1, comportant de plus des moyens de poussée (58) pour faire entrer le au moins un produit chimique liquide de test depuis le réservoir jusque dans le vaporisateur, et des moyens de commande (70) pour commander le débit d'écoulement du au moins un produit chimique liquide de test entrant dans le vaporisateur.

3. Agencement selon la revendication 2, dans lequel les moyens de poussée (58) comportent un gaz sous pression en communication de fluide avec le au moins un produit chimique liquide de test, et en amont de celui-ci.

4. Agencement selon la revendication 1, dans lequel le vaporisateur (86) est en communication de fluide avec une source (118) de vapeur d'eau sous pression, et le vaporisateur (86) est configuré pour fournir un contact entre le au moins un produit chimique liquide de test et la vapeur d'eau provenant de la source de vapeur d'eau sous pression (118) pour former un second mélange comportant la vapeur chimique de test et la vapeur d'eau située dans le vaporisateur.

5. Agencement selon la revendication 4, dans lequel le conduit (178) a une paroi (180) définissant un passage (196) s'étendant longitudinalement à travers le conduit (178), le passage (196) a une extrémité amont et une extrémité avale où l'extrémité avale est définie comme étant plus proche du dispositif d'oxydation thermique (200) que l'extrémité amont, le vaporisateur (86) comporte un orifice de sortie (142) pour évacuer le second mélange depuis le vaporisateur, et le dispositif comporte de plus un tuyau (182) ayant un axe longitudinal (184), une surface extérieure (192), une première extrémité (204) connectée à l'orifice de sortie (142) du dispositif de vaporisation et une seconde extrémité ouverte (208), et s'étendant à travers la paroi (180) et se terminant dans le passage (196).

6. Agencement selon la revendication 5, dans lequel l'extrémité ouverte (208) du tuyau (182) se termine dans une face d'extrémité plane à angle ouvert (212) orientée d'une manière telle que la face d'extrémité plane à angle ouvert est dirigée vers l'extrémité avale du passage (196).

7. Dispositif (9) pour tester l'efficacité d'un dispositif d'oxydation thermique (200), comportant :
(a) un réservoir (26) contenant au moins un produit chimique liquide de test,
(b) un vaporisateur (86), en communication de fluide avec le réservoir, pour vaporiser le au moins un produit chimique liquide de test pour former une vapeur chimique de test,
(c) des moyens (94) pour mesurer un débit d'écoulement du au moins un produit chimique liquide de test entrant dans le vaporisateur à partir du réservoir, et
(d) des moyens pour mesurer un débit d'écoulement de la vapeur chimique de test, ou du produit d'oxydation de celle-ci, sortant du dispositif d'oxydation thermique (200),
dans lequel le dispositif est adapté pour une connexion à un côté d'entrée du dispositif d'oxydation thermique pour permettre l'écoulement de la vapeur chimique de test dans le côté d'entrée du dispositif d'oxydation thermique.

8. Dispositif (9) selon la revendication 7, modifié de plus pour le rendre portable, comportant :
(a) une plate-forme (10), la plate-forme ayant, montés directement ou indirectement sur celle-ci :
(i) un réservoir (26) contenant au moins un produit chimique liquide de test,
(ii) un vaporisateur (86), en communication de fluide avec le réservoir, pour vaporiser le au moins un produit chimique reçu depuis le réservoir pour former une vapeur chimique de test, et
(b) des moyens (94) pour mesurer un débit d'écoulement du au moins un produit chimique liquide de test entrant dans le vaporisateur à partir du réservoir,
dans lequel le dispositif (9) est adapté pour une connexion à un côté d'entrée du dispositif d'oxydation thermique pour permettre un écoulement de la vapeur chimique dans le côté d'entrée du dispositif d'oxydation thermique.

9. Dispositif selon la revendication 7 ou 8, comportant de plus des moyens de poussée (58) pour faire entrer le au moins un produit chimique liquide de test depuis le réservoir jusque dans le vaporisateur (86), et des moyens de commande (70) pour commander le débit d'écoulement du au moins un produit chimique liquide de test.

10. Dispositif selon la revendication 7 ou 8, dans lequel le vaporisateur (86) comporte de plus un orifice de sortie (142) pour évacuer la vapeur chimique de test depuis le dispositif de vaporisation, et le dispositif comporte de plus un conduit d'entrée annexé à un côté d'entrée du dispositif d'oxydation thermique pour fournir une communication de fluide entre le vaporisateur et le conduit d'entrée, et un tuyau (182) ayant un axe longitudinal (184), une première extrémité (204) connectée à l'orifice de sortie (142) du vaporisateur et une seconde extrémité (208) se terminant dans une face d'extrémité ouverte se trouvant dans un plan, la seconde extrémité s'étendant dans un passage (196) du conduit d'entrée (178).

11. Procédé pour déterminer l'efficacité d'un dispositif d'oxydation thermique (200), comportant les étapes consistant à :
(a) introduire au moins un produit chimique liquide de test dans un vaporisateur (85) à un débit d'écoulement mesuré sur une période de temps,
(b) vaporiser le produit chimique liquide de test pour former la vapeur chimique de test,
(c) diriger la vapeur chimique de test dans un conduit d'entrée du dispositif d'oxydation thermique (200), le conduit contenant un flux de gaz perdu qui est combiné avec la vapeur chimique de test pour former un premier mélange,
(d) diriger le premier mélange à travers le conduit d'entrée et dans un côté d'entrée du dispositif d'oxydation thermique (200), et
(e) mesurer un débit d'écoulement de la vapeur chimique de test, ou du produit d'oxydation de celle-ci, sortant d'un côté de sortie du dispositif d'oxydation thermique,
(f) calculer l'efficacité sur la base des débits d'écoulement des étapes (a) et (e).
